# EUROPEAN PATENT APPLICATION

(11) **EP 0 841 308 A1**
(43) Date of publication of application: **13.05.1998**
(21) Application number: 97119712.4
(22) Date of filing: 11.11.1997
(51) Int. Cl.: C04B 14/06, C04B 30/02, F16L 59/02, F16L 59/14

(54) **Thermal insulation and its preparation**

(30) Priority: 12.11.1996 US 746598
(71) Applicant: Armstrong World Industries, Inc., Lancaster Pennsylvania 17604 (US)
(72) Inventor: Newman, Barbara A., Millersville, PA 17551 (US); Lu, Lida, Lancaster, PA 17601 (US)
(74) Representative: Finck, Dieter, Dr.Ing.

(57) **Abstract**

Thermal insulation which is a dried, intact composite that includes aerogel particles at an amount in the range of from about 5 to about 95% and either hectorite clay, a product of hectorite clay combined with carboxy methyl cellulose or both, present at an amount in the range of from about 95 to about 5% by weight. The insulation can be prepared by mixing the ingredients in water followed by molding and drying.

## Description

### Background of the Invention

### Field of the Invention

This invention describes a composite insulation containing silica aerogel and a method for its preparation.

Thermal insulation is an important and valuable product. Although many insulative compositions are already in use, there is a continuing desire for energy conservation pushing a drive to achieve insulation having lower thermal conductivity (Tk).

In addition to a low Tk, furthermore, insulation ideally should have other qualities. It should be easily prepared, non-toxic, environmentally safe in both use and preparation, and it should have good handling properties. Insulation which is capable of being molded into large sheets or other needed shapes, and which has sufficient flexibility and compressibility to be transported, handled and installed in homes, buildings, and even manufactured goods is called for.

Aerogels are known to be advantageously insulative; but, as insulation, they are disadvantageous in several ways. As a loose fill, aerogel is dusty, and is prone to settling over time. In addition to this, the aerogel is brittle, non-flexible and when compressed it fractures. As a result, aerogel can't be flexed during use. An attempt to compress or flex large pieces of it will result in breaking them. Transportation, handling and installation are difficult with aerogels due to the lack of shock resistance and flexibility.

Thus, there is need for the thermally insulative composites which are described herein. The present invention provides thermal insulation having a low Tk, good handling properties, and is also environmentally safe and is easily made.

### Summary of the Invention

Thermally insulative composites can be prepared using a process which comprises mixing water and either hectorite clay or a product of a combination of carboxy methyl cellulose with hectorite clay or both the clay and the product, to form a wet mixture, and combining comminuted aerogel particles and the wet mixture to form a wet, uniform mixture, and drying the wet uniform mixture to obtain thermal insulation.

The thermal insulation comprises a composite composition of comminuted aerogel and either hectorite clay or a product of a combination of carboxy methyl cellulose with hectorite clay (also called the "clay product" and "the hectorite clay product") or both the clay and the clay product. The aerogel is present at an amount of at least about 5% by total dry weight of the composite (TDW). The clay or clay product must be present at an amount of at least about 5% by TDW. As long as these minimum amounts are present, an intact composite suitable for insulation can be obtained. In fact it has been discovered that both the aerogel and the clay or clay product must be present in order to form an intact composite unless another additive such as a binder or perlite is used.

The clay and clay product perform the function of binding the composite together. Although other ingredients such as a binder might used to allow a reduction in the level of clay or aerogel to form an intact composite, the binder will normally be detrimental to fire and smoke properties and to thermal conductivity. Thus, it is preferred to make the insulation with the aerogel and clay, clay product, or both.

The present insulative composite can be made into pipe insulation. Advantageously, the insulative composite can be formed (such as, for example, by molding the wet mixture) into a pipe covering material which is also insulative and can be secured around a pipe to cover it and provide effective insulation for the pipe.

As pipe insulation the composite composition forms substantially identical sections which, when put together, form the hollow structure, shaped so that it can snugly embrace the pipe to be covered. Each section has mating surfaces which, when put together form a tubular shaped hollow structure with a central bore that has a size which allows it to snugly embrace the pipe to be covered.

To close and hold the insulation to the pipe, any suitable means can be used. For example, a pipe wrap can be put around the outside of the structures, holding the mating surfaces together and holding the insulation on the pipe. Alternatively, an adhesive coating can be put on at least one surface which will be brought into contact with and hold the mating surface (which can also optionally have adhesive) on the other section of pipe covering. Preferably, both surfaces will have an adhesive so that the sections will be secured to each other and held together by the cohesion of the adhesives. A layer of protective sheet material can be put over the adhesive on the coated surface of each pipe covering section to keep it from sticking until it is ready for installation.

### Description of the Drawings

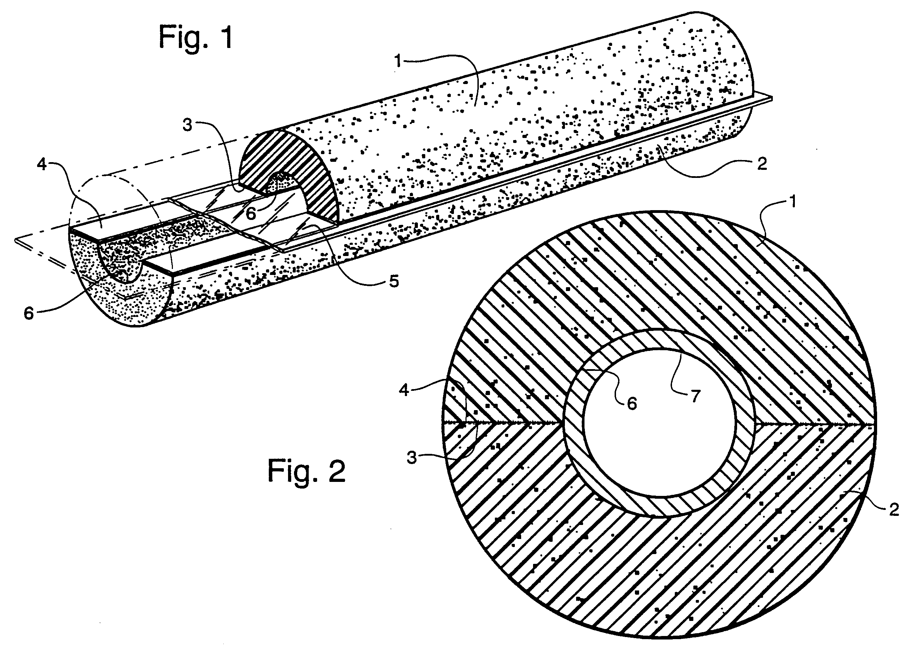

Fig. 1 is a view of the pipe insulation showing substantially identical mating sections 1 and 2 of the pipe covering. Each of the sections has an adhesive coated mating surface 3 and 4 of each section with the protective sheet of release paper 5 in between the mating surfaces to prevent them from sticking to each other. When the sections 1 and 2 are placed together they form a tubular structure which is a jacket for the pipe. The tubular structure (or jacket) has a bore 6 which has a suitable size to receive a pipe.

Fig. 2 is a cross sectional view through the pipe covering and pipe 7 which it covers. Mating sections 1 and 2 are shown along with the mating surfaces 3 and 4, the bore 6 and pipe 7.

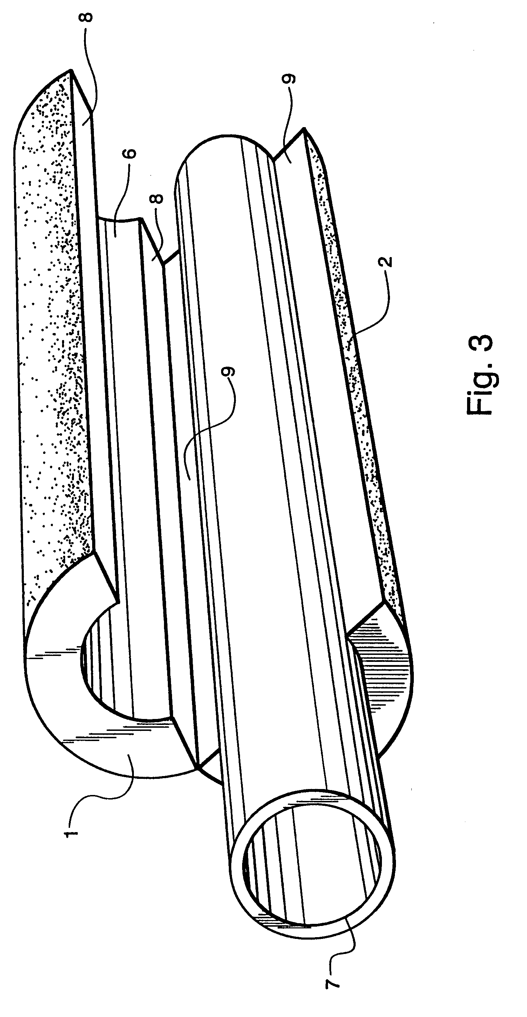

Fig. 3 is a view of the pipe insulation covering (jacket) which is in an open position with a pipe 7 in one section and the exposed, substantially identical mating surfaces 8 and 9. the two sections can be placed together and secured by suitable means for holding the sections in place (such as ties or cladding). Alternatively, as in Fig. 1, a pressure sensitive adhesive can be used so that the two identical mating sections 1 and 2 can be put together so that the mating surfaces touch and stick to each other.

### Detailed Description

The present insulative composite can be prepared by mixing the water and the hectorite clay and/or the hectorite clay product to hydrate the clay and/or the product, and form a wet mixture. The water must be used in an amount which is effective to allow the aerogel to be combined with the clay, the clay product or the mixture of both. Preferably the amount of water used in the process will be in the range of from about 60 to about 85% by weight of the total wet mixture. After the clay or clay product has been dispersed in the water to form the wet mixture, the comminuted aerogel must be added to form a wet, uniform mixture (a wet mixture in which the aerogel is uniformly mixed).

The wet, uniform mixture can then be formed into any suitable shape for the insulation. Suitably the mixture is put into a mold. If desired, however, the mixture can also be extruded. In some applications the mixture can be extruded directly into the place to be insulated.

The wet, uniform mixture is then dried. Although drying can be done at any suitable temperature, including ambient, it is preferred to heat the mixture to accelerate the drying step. A preferred temperature to dry the wet, uniform mixture can be selected from the range of from about 60 to about 98°C.

It has been discovered that after it is dried, an intact insulation is formed. The insulation has good handling properties and can be put into the area to be insulated. At a minimum of 30% by weight aerogel, the insulation can deliver a thermal conductivity of about .03 watt/meterK° (W/mK) or lower.

With the present invention at least about 5% by weight of the dried, composite must be comminuted aerogel. The aerogel, thus, can range from about 5 to about 95% by weight in the dry composite.

A suitable aerogel for the present invention can be prepared by removing liquid from a silica-based gel under conditions which minimize the shrinkage of the gel's solid structure. The phrase "silica-based" refers to gels made with solicon compounds (such as, for example, tetraethylorthosilicate, silicate, or colloidal silica).

Typical processes for making aerogels minimize shrinkage by using supercritical conditions while drying to form the porous, solid aerogel. The aerogel can, therefore, be commercially obtained, or it can be prepared using suitable procedures known to the art, such as those indicated in, for example, U.S. Patents 4,954,327, 4,610,863, and 2,978,298.

The aerogel is in comminuted form and is dispersed in the wet clay mixture. It has been discovered that comminuted aerogel is needed for the clay and/or clay product to form a solid, intact composite unless some other clay-binding ingredient (such as fiber) is added. The comminuted aerogel can have particles ranging in size from about 6mm in diameter or less. There is no actual limit to how small the aerogel particles can get. Suitably the aerogel can have an average particle size in the range of from about .0001 to about 6 mm in diameter. Preferably the aerogel has an average particle size in the range of from about .001 to about 5 millimeters (mm) in diameter.

The aerogel is used in the composite at an amount in the range of from about 5 to about 95% by weight. Preferably the aerogel is used in the composite at an amount in the range of from about 30 to about 90% by weight. Since the aerogel is responsible for low thermal conductivity, however, it is most preferred that the aerogel be present in an amount in the range of from about 50 to about 95% by weight of the dry composite.

Hectorite clay belongs to the smectite clay mineral group. Smectites are a group of layered hydrous alumino-silicates. They exhibit the unique property of swelling in the presence of water because of their expanding crystal lattice properties. The highest swelling smectite is hectorite clay, which can swell to 35 times its weight. The use of hectorite is critical to the end product, although the use of other smectites such as montmorillonite for example, produces a crumbled product. Clays in the kaolin group are also not suitable since they do not swell and are unable to bind the aerogel as the hectorite can.

With the clay product, a minimum preferred amount of carboxy methyl cellulose is about 5% by weight of CMC in the hectorite. Preferably there is at least about 10% by weight of the CMC in the hectorite. A preferred range is from about 10 to about 50% by weight of the CMC in the hectorite.

Additives can be added to the present composites. Additives can be used for one or more purposes, such as to improve tensile strength, modify density, decrease friability, optimize thermal conductivity, and even make the composite adhesive. For example, it is preferred to use a suitable binder with the composite when hectorite clay is used because of its friability and tendency to crumble. A preferred binder for the instant composites is fiber. A preferred fiber is mineral wool.

Other additives include materials such as a fire retardant, a filler, an opacifier, a surfactant, a pigment, perlite, a binder and fiber. Suitably such materials can be added to the wet mixture or the wet, uniform mixture at an amount in the range of from about 5 to about 45% by weight of the total dry composite. Although organic materials may be used, it is important to keep the fire and smoke properties down in the insulation. Thus, if using an additive, it is preferred to use an inorganic, or non-flammable additive. With fiber, for example, it is preferred to use mineral wool, although any fiber may be used to increase the strength of the composite.

Fiber is a useful and preferred additive. It can be included in order to increase the product strength. Preferred amounts for the fiber are in the range of from about .5 to about 25% by dry total weight of the product composite. Although any fiber can be used, preferred fibers include fiberglass, mineral wool, wollastonite, fire retarded cellulose, and ceramic.

Clay products for use with the present invention can be obtained which are a combination of carboxy methyl cellulose with hectorite clay. Such a product, for example, is commercially available from American Colloid Co. which offers Hectabrite Lt clay which is hectorite clay modified by carboxy methyl cellulose. Such products are suitable to prepare the insulation of the present invention.

### Example 1

A sample was prepared by combining 250 ml (milliliters) of water and 20 g (grams) of the carboxy methyl cellulose treated hectorite clay (Hectabrite Lt clay from American Colloid Co.) to form an aqueous clay dispersion. The Hectabrite Lt clay was the product of the hectorite clay modified by carboxy methyl cellulose.

After mixing the water with the Hectabrite, 80 g of a particulate silica aerogel was combined with the clay to form a mixture. The aerogel was in the form of a comminuted powder having particle sizes in the range of from about 4 to about 7 millimeters. The wet mixture was then put into a rectangular mold and dried. The sample was demolded. It was noted that the sample remained intact as it was handled.

The thermal conductivity of the sample was measured by ASTM C1114-92 and was found to be 0.0229 w/mK (watt/meter°K).

### Example 2

This example demonstrates that the carboxy methyl cellulose modified hectorite clay cannot be used by itself. If the aerogel is not present, an intact solid cannot be formed.

A sample was prepared by combining 250 ml of water and 20 g (grams) of the carboxy methyl cellulose treated hectorite clay which was used in Example 1 (from American Colloid Co.) to form an aqueous clay dispersion.

The wet mixture was then put into a rectangular mold and dried. Without the aerogel, however, the clay-cellulose material collapsed into a loose dust. An intact, solid sample was not obtained.

### Example 3

A sample was prepared by combining 250 ml of water and 10 g of the carboxy methyl cellulose treated hectorite clay (Hectabrite Lt clay from American Colloid Co. used in Examples 1 and 2) to form an aqueous clay dispersion.

After mixing the water with the Hectabrite, 90 g of a particulate silica aerogel of the same type as was used in Example 1 was combined with the clay to form a mixture. The aerogel was in the form of a comminuted powder having particle sizes in the range of from about 4 to about 5 millimeters. The wet mixture was then put into a rectangular, 4x6 inch mold and dried. The sample was demolded. It was noted that the sample could be handled, and yet it remained an intact solid even with this handling.

The thermal conductivity of the sample was measured by ASTM C-1114-92 and was found to be 0.0187 w/mK (watt/meter°K).

### Example 4

A sample was prepared by combining 250 ml of water and 5 g of the carboxy methyl cellulose modified hectorite clay (Hectabrite Lt clay from American Colloid Co.) to form an aqueous clay dispersion.

After mixing the water with the Hectabrite, 95 g of a particulate silica aerogel having the same particle size as was used in Example 1, was combined with the clay to form a mixture.

The wet mixture was then put into a rectangular mold and dried. The sample was demolded. It was noted that the sample remained intact as it was handled.

The thermal conductivity of the sample was measured by ASTM C1114-92 and was found to be 0.0192 w/mK (watt/meter°K).

### Example 5

This sample was prepared with hectorite clay and mineral wool. The sample was prepared by combining 250 ml (milliliters) of water with the mineral wool. The mineral wool fiber was dispersed in the water then fire retardant was added, and then the hectorite clay was dispersed in the mixture. The clay used was HectabriteAW from American Colloid Co.

Aerogel was then combined. The aerogel was in the form of a comminuted powder having particle sizes in the range of from about 4 to about 7 millimeters. The wet mixture was then put into a rectangular mold and dried. The sample was demolded. It was noted that the sample remained intact as it was handled.

The composite was 65% aerogel, 10% hectorite, 20% CaHPO₄ as a fire retardant, and 5% mineral wool.

### Example 6

A sample was prepared using hectorite clay. The sample was prepared by combining 250 ml (milliliters) of water with the fire retardant followed by combining the hectorite clay. The clay used was HectabriteAW from American Colloid Co. After the clay and water had mixed so that the clay was completely wet, forming a clay dispersion, this wet mixture was combined with the aerogel.

The aerogel was in the form of a comminuted powder having particle sizes in the range of from about 4 to about 7 millimeters. The wet mixture was then put into a rectangular mold and dried. The sample, measuring 12" x 12" x 1" (inches) was demolded. It was noted that the sample remained intact as it was handled.

This example shows that intact insulation can be made using hectorite clay and aerogel.

## Claims

1. Thermal insulation which comprises a dried, intact composite which consists essentially of aerogel particles at an amount in the range of from about 5 to about 95% by weight of the dried, intact composite and either hectorite clay, a product of hectorite clay combined with carboxy methyl cellulose or both, present at an amount in the range of from about 95 to about 5% by weight of the dried, intact composite.

2. Thermal insulation as described in claim 1 wherein the average diameter of the aerogel particles is in the range of from about .0001 to about 6 millimeters in diameter.

3. Thermal insulation as described in claim 1 wherein the aerogel particles are present at an amount of from about 30 to about 95% by weight of the dried, intact composite.

4. Thermal insulation as described in claim 1 wherein the product of hectorite clay combined with carboxy methyl cellulose is present.

5. Thermal insulation as described in claim 1 wherein the hectorite clay is present.

6. Thermal insulation as described in claim 5 wherein fiber is also included in the composite.

7. Thermal insulation as described in claim 6 wherein the fiber is selected from the group consisting of fiberglass, mineral wool, wollastonite, fire retarded cellulose, and ceramic.

8. Thermal insulation as described in claim 1 which includes a material selected from the group consisting of a fire retardant, a filler, an opacifier, a surfactant, a pigment, perlite, a binder and fiber.

9. Thermal insulation as described in claim 8 wherein the material is present at an amount in the range of from about 5 to about 45% by weight of the total dry composite.

10. Thermal insulation as described in claim 1 which has a thermal conductivity of about .03 W/mK or lower.

11. Pipe insulation comprising a pipe jacket formed by two mating sections, these sections being a first section and a second section, wherein these two sections are substantially identical in shape and size, and each section has a mating surface, wherein the mating sections together form a tubular structure having a bore which has a suitable size to receive a pipe when the mating surface of the first section exactly abuts the mating surface of the second section; further providing that the two mating sections contain as insulation a dried, intact, insulative composite composition which consists essentially of aerogel particles at an amount in the range of from about 5 to about 95% by weight of the dried, intact insulative composite composition, and either hectorite clay, a product of hectorite clay combined with carboxy methyl cellulose or both, being present at an amount in the range of from about 95 to about 5% by weight of the dried, intact, insulative composite composition.

12. Pipe insulation as described in claim 11 wherein the average diameter of the aerogel particles is in the range of from about .0001 to about 6 millimeters in diameter.

13. Pipe insulation as described in claim 11 wherein the product of hectorite clay combined with carboxy methyl cellulose is present.

14. Pipe insulation as described in claim 11 wherein the hectorite clay is present.

15. Pipe insulation as described in claim 14 wherein fiber is also included in the composite.

16. Pipe insulation as described in claim 15 wherein the fiber is selected from the group consisting of fiberglass, mineral wool, wollastonite, fire retarded cellulose, and ceramic.

17. Pipe insulation as described in claim 11 which has a thermal conductivity of about .03 W/mK or lower.

18. Pipe insulation as described in claim 11 wherein the aerogel particles are present at an amount in the range of from about 30 to about 95% by weight.

19. A process for making thermal insulation comprising combining water and either hectorite clay or a product of a combination of hectorite clay with carboxy methyl cellulose or both the hectorite clay and the product, to form a wet mixture and, mixing in a comminuted silica aerogel to obtain a wet, uniform mixture, and drying the wet, uniform mixture to obtain the thermal insulation.

20. A process as described in claim 19 wherein the amount of water used will be in the range of from about 60 to about 85% by weight of the total wet mixture.
